# EUROPÄISCHE PATENTSCHRIFT

(11) **EP 3 267 621 B1**
(45) Veröffentlichungstag und Bekanntmachung des Hinweises auf die Patenterteilung: **03.11.2021**
(21) Anmeldenummer: 17180021.2
(22) Anmeldetag: 06.07.2017
(51) Int. Cl.: H04L 12/18

(54) **VERFAHREN ZUR ERZEUGUNG EINES AN EINEN REALEN ENDPUNKT ZU ÜBERMITTELNDEN GESAMTRAUMKLANGS, VERWENDUNG DES VERFAHRENS SOWIE TELEKONFERENZSYSTEM**
METHOD FOR GENERATING AN OVERALL ROOM NOISE FOR PASSING TO A REAL ENDPOINT, USE OF SAID METHOD AND TELECONFERENCING SYSTEM
PROCÉDÉ DE FABRICATION D'UN SON STÉRÉO À TRANSMETTRE À UN POINT FINAL RÉEL, UTILISATION DU PROCÉDÉ ET SYSTÈME DE TÉLÉCONFÉRENCE

(30) Priorität: 08.07.2016 DE 102016112609
(43) Veröffentlichungstag der Anmeldung: 10.01.2018
(73) Patentinhaber: Fraunhofer-Gesellschaft zur Förderung der angewandten Forschung e.V., 80686 München (DE)
(72) Erfinder: Martin, Alfons, 72762 Reutlingen (DE); Schreiner, Patrick, 72076 Tübingen (DE)
(74) Vertreter: Zinkler, Franz

(56) Entgegenhaltungen:
- US-A1- 2006 212 147
- US-A1- 2008 144 794

## Beschreibung

Die Erfindung betrifft ein Verfahren zur Erzeugung eines an einen realen Endpunkt zu übermittelnden Gesamtraumklangs, wobei dem realen Endpunkt ein Audiosignal zugeordnet ist. Weiterhin betrifft die Erfindung die Verwendung des Verfahrens und ein Telekonferenzsystem.

An einer Telekonferenz nehmen in der Regel mehrere Teilnehmer teil und kommunizieren untereinander. Dazu müssen Audiosignale, in diesem Falle Sprachsignale der Teilnehmer, verarbeitet und zwischen den Teilnehmern übermittelt werden. Insbesondere muss jeweils ein Teilnehmer die Audiosignale der jeweils anderen Teilnehmer in Form eines Gesamtsignals empfangen.

Bei weiterentwickelten Telekonferenzsystemen wird dazu ein virtueller (Konferenz-)raum simuliert, den alle Teilnehmer zu Zwecken der Telekonferenz virtuell betreten bzw. scheinbar in diesem kommunizieren.

Ein solches Telekonferenzsystem ist beispielsweise aus der US 2010/0316232 A1 bekannt. Das Telekonferenzsystem weist Telekonferenzendpunkte mit jeweils einer Audio-Aufnahme- und Wiedergabeeinheit, beispielsweise in Form eines Headsets mit einem Kopfhörer und einem Mikrofon, auf. Über die Telekonferenzendpunkte können Teilnehmer an einer Telekonferenz teilnehmen.

In der Druckschrift ist insbesondere beschrieben, dass jedem der Teilnehmer eine virtuelle Position in einem virtuellen Raum, insbesondere an einem virtuellen Konferenztisch, zugeordnet wird.

Um den Teilnehmern des Telekonferenzsystems einen möglichst realitätsnahen bzw. naturgetreuen Höreindruck zu verschaffen, werden Raumklänge aus von jeweils anderen Telekonferenzendpunkten über deren Audio-Aufnahmeeinheiten aufgenommenen Audiosignalen erzeugt. Dazu wird mittels der Raumklänge einem empfangenden Telekonferenzendpunkt bzw. hörenden Teilnehmer der Eindruck verschafft, dass ein Audiosignal eines jeweils anderen Telekonferenzendpunktes bzw. Teilnehmers von dessen zugeordneter virtueller Position innerhalb des virtuellen Raums ausgehend zu ihm gelangen und an seiner eigenen Position am virtuellen Konferenztisch empfangen bzw. gehört würde.

Aus diesen Raumklängen wird anschließend für jeden (empfangenden) Telekonferenzendpunkt bzw. Teilnehmer ein Gesamtraumklang aus allen Raumklängen aller anderen Telekonferenzendpunkte bzw. Teilnehmer gemischt und dem zugehörigen Teilnehmer über die zugehörige Audio-Wiedergabeeinheit präsentiert, sodass jeder Teilnehmer letztlich einen Höreindruck erhält, als ob er tatsächlich an dem (virtuellen) Konferenztisch säße und mit den anderen Teilnehmern kommunizieren würde.

Nachteilig dabei ist jedoch, dass die Anzahl der zu erzeugenden Raumklänge näherungsweise quadratisch mit der Anzahl der Teilnehmer steigt. Somit steigen Anforderungen an verfügbare Rechenleistungen und dergleichen überproportional mit der Anzahl der Teilnehmer an. Dadurch ist die Anzahl der Teilnehmer einer solchen Telekonferenz in der Regel limitiert und/oder es bedarf großer Serverfarmen, um den entstehenden Rechenaufwand zu bewältigen.

Aus der WO 199053673 A1 ist ein weiteres Telekonferenzsystem mit ähnlichen Nachteilen bekannt.

Ein anderer Weg, um Telekonferenzen für größere Teilnehmerzahlen zu ermöglichen, wird in der US 8,627,213 B1 vorgeschlagen. Dabei ist vorgesehen, mit steigender Teilnehmeranzahl die Qualität der erzeugten Raumklänge zu verschlechtern und somit den benötigten Rechenaufwand je erzeugtem Raumklang zu reduzieren. Hierunter leidet jedoch der Nutzungskomfort eines solchen Telekonferenzsystems.

Dabei wird das eingangs skizzierte Problem weiter dadurch verschärft, dass die Raumklänge letztlich mehrkanalige, insbesondere stereophone, Signale darstellen. Somit müssen für jeden zu erzeugenden Raumklang mindestens zwei Einzelsignale berechnet werden. Dadurch erhöht sich der effektiv benötigte Rechenaufwand weiter.

Die US 2008/0144794 A1 offenbart ein Teleconferencing-System, bei dem Teilnehmer in einer virtuellen Welt teilnehmen können, um natürlich Konversation zu betreiben, als wenn Sie in einer echten Situation wären. Jeder Teilnehmer kann nahegelegene Teilnehmer hören, die gemäß Ihren Positionen in der virtuellen Welt lokalisiert sind, und zwar sowohl mit Nachhall - als auch Umgebungsaudioeffekten, die von Eigenschaften der virtuellen Welt abgeleitet sind.

Aufgabe der vorliegenden Erfindung ist es daher, ein Verfahren sowie eine Telekonferenzvorrichtung anzubieten, mit denen der Rechenaufwand für die Erzeugung von Gesamtraumklängen, insbesondere für eine große Anzahl von Teilnehmern, reduziert werden kann.

Gelöst wird die Aufgabe durch ein Verfahren zur Erzeugung eines an einen realen Endpunkt zu übermittelnden Gesamtraumklangs, gemäß Anspruch 1.

Somit können Audiosignale von einem realen Endpunkt, beispielsweise einem ersten Endpunkt eines Telekonferenzsystems, an einen anderen realen Endpunkt, beispielsweise einen zweiten Endpunkt des Telekonferenzsystems, übermittelt werden, indem für jeden Teilnehmer basierend auf den von anderen Teilnehmern erzeugten Audiosignalen ein Gesamtraumklang erzeugt und übermittelt wird.

Dabei können die Audiosignale beispielsweise über Mikrofone an den realen Endpunkten aufgenommen und verfahrensgemäß verwendet werden. Die Audiosignale können vorzugsweise Sprachsignale, insbesondere monophone Sprachsignale sein.

Erfindungsgemäß wird ein jeweils "hörender" Teilnehmer bzw. ein ihm zugeordneter realer Endpunkt zum Empfang von Audiosignalen anderer Teilnehmer bzw. Endpunkte an einer für alle Teilnehmer bzw. realen Endpunkte identischen Position, der Standard-Empfängerposition, virtuell in dem virtuellen Raum positioniert. Die Standard-Empfängerposition kann beispielsweise einer Kopfseite eines im virtuellen Raum angeordneten virtuellen Konferenztisches entsprechen. Diese Festlegung kann bereits bei der Konstruktion eines das erfindungsgemäße Verfahren anwendenden Systems erfolgen. Sie kann auch jeweils zu Beginn einer Verwendung des Verfahrens erfolgen.

Zusätzlich wird jedem realen Endpunkt eine definierte, vorzugsweise von der Standard-Empfängerposition verschiedene, Position innerhalb des virtuellen Raums zugeordnet. Beispielsweise können die definierten Positionen virtuellen Sitzpositionen an Seitenbereichen des virtuellen Konferenztischs entsprechen.

Auf Basis des Audiosignals zumindest eines realen Endpunkts sowie seiner definierten Position und der Standard-Empfängerposition im virtuellen Raum wird nun ein Raumklang erzeugt. Insbesondere wird der Raumklang so erzeugt, als ob das Audiosignal von der definierten Position abgestrahlt und an der Standard-Empfängerposition empfangen würde. Beispielsweise kann eine Richtung und eine Distanz aus der Lage der definierten Position und der Standard-Empfängerposition zueinander ermittelt werden und ein Raumklang aus dem Audiosignal entsprechend der Richtung und Distanz erzeugt werden.

Somit wird der Eindruck geschaffen, als ob Audiosignale der ihnen jeweils zugeordneten realen Endpunkte jeweils von der jeweiligen definierten Position abgestrahlt würden.

Zur Erzeugung des Raumklangs kann simuliert werden, dass an der Standard-Empfängerposition ein Empfängerpaar mit wenigstens zwei voneinander beabstandeten Empfängern angeordnet ist. Dann kann beispielsweise zusätzlich eine Standard-Empfängerrichtung, mithin eine "Blick-" oder "Hörrichtung", berücksichtigt werden, mit der die relative Orientierung des Empfängerpaars zur definierten Position beschrieben werden kann. Somit können noch weitere raumklangbeeinflussende Eigenschaften, beispielsweise vordefinierbare Abstrahlcharakteristika oder Empfangscharakteristika, berücksichtigt werden.

Für zumindest einen realen Endpunkt werden anschließend Raumklänge eines oder mehrerer anderer realer Endpunkte zu jeweils einem Gesamtraumklang zusammengefasst. Dieser Gesamtraumklang wird dann an den zumindest einen realen Endpunkt übermittelt.

Somit empfängt der zumindest eine reale Endpunkt Raumklänge auf Basis der jeweiligen Audiosignale anderer realer Endpunkte. Insbesondere "hört" ein realer Endpunkt den ihm zugeordneten Gesamtraumklang. Sein Gesamtraumklang liefert einen Raumklangeindruck, nach dem die anderen realen Endpunkte ihre Audiosignale von den jeweiligen definierten Positionen an seine scheinbar eigene Empfänger-Position innerhalb des virtuellen Raums senden würden. Da dem zumindest einen realen Endpunkt nur jeweils der ihm zugeordnete Gesamtraumklang übermittelt wird, besteht für diesen bzw. für den ihm zugeordneten Teilnehmer keine direkte Möglichkeit zu erkennen, dass die scheinbar eigene Empfänger-Position jeweils der Standard-Empfängerposition entspricht und für alle realen Endpunkte identisch ist.

Erfindungsgemäß genügt es dadurch, für jeden realen Endpunkt höchstens einen Raumklang und einen Gesamtraumklang zu erzeugen.

Somit wächst die Anzahl benötigter Raumklänge nicht mehr näherungsweise quadratisch, sondern nur noch näherungsweise linear mit der Anzahl realer Endpunkte. Das erfindungsgemäße Verfahren erweist sich somit als besonders effizienzsteigernd.

Auch kann ein zusätzlicher realer Endpunkt mit zugehörigem Audiosignal einfach hinzugefügt werden, indem ihm eine definierte Position zugeordnet wird und ein Raumklang für diesen bzw. diese erzeugt wird, vorzugsweise bevor Gesamtraumklänge erzeugt werden.

Das Verfahren ist insbesondere für große Teilnehmerzahlen einsetzbar bzw. erfordert bei gegebener Teilnehmeranzahl nur geringe Rechenleistungen und Übertragungskapazitäten. Mit anderen Worten wird gegenüber dem Stand der Technik eine wesentliche Effizienzsteigerung erreicht, ohne dass es zu merklichen Qualitätseinbußen bezüglich des raumklanglichen Eindrucks kommt.

Eine weitere Effizienzsteigerung lässt sich erzielen, wenn Audiosignale gesamthaft und/oder paketweise vorselektiert werden. Beispielsweise können zur Erzeugung von Raumklängen und/oder Gesamtraumklängen nur die Audiosignale der realen Endpunkte berücksichtigt werden, die einen vorgebbaren Pegel bzw. Leistungsniveau überschreiten. Dies kann gesamthaft, das heißt für ein vollständiges Audiosignal, oder auch paketweise, das heißt für Segmente des Audiosignals, erfolgen. Andere Audiosignale können somit ausgeblendet werden. Somit können beispielsweise nicht benötigte Hintergrundgeräusche eliminiert werden. Auch kann die Menge zu verarbeitender Signale bzw. Signaldaten reduziert werden.

Ein Raumklang bzw. -effekt lässt sich besonders einfach erzeugen, wenn ein Raumklang mittels einer interauralen Laufzeitdifferenz (ILD) und/oder einer interauralen Pegeldifferenz (IPD) erzeugt wird. ILD und IPD ermöglichen es beispielsweise, ein monophones Audiosignal in einen (stereophonen) Raumklang zu wandeln und dem Raumklang eine scheinbare Richtung einzuprägen. Dazu kann zur Herstellung einer ILD das Audiosignal zeitversetzt in verschiedene Kanäle des Raumklangs eingespeist werden. Zur Herstellung einer IPD kann das Audiosignal mit unterschiedlichen Lautstärkepegeln bzw. unterschiedlichen Verstärkungen und/oder Dämpfungen in verschiedene Kanäle des Raumklangs eingespeist werden.

Die Realitätsnähe erzeugter Raumklänge bzw. Gesamtraumklänge lässt sich weiter steigern, wenn ein Audiosignal und/oder ein Raumklang und/oder ein Gesamtraumklang mittels einer Head-Related Transfer Function gefiltert werden.

Auch kann einem Audiosignal, einem Raumklang und/oder einem Gesamtraumklang ein Echo- und/oder ein Nachhall-Effekt, vorzugsweise in Abhängigkeit wenigstens einer definierten Position, hinzugefügt werden.

Dabei ist es besonders vorteilhaft, wenn der Echo- und/oder der Nachhall-Effekt, beispielsweise zur Imitation unterschiedlicher Wand- oder Deckenmaterialien des virtuellen Raums, eingestellt werden.

Beispielsweise kann die Anzahl simulierter Reflexionen von Audiosignalen an Wänden und Decken eingestellt werden. Beispielsweise kann eingestellt werden, ob nur direkte Verbindungen zwischen einer definierten Position und der Standard-Empfängerposition zur Raumklangerzeugung berücksichtigt werden und/oder indirekte Verbindungen, insbesondere zwei, drei oder mehr virtuelle Reflexionen, berücksichtigt werden. Auch können Materialien im virtuellen Raum angeordneter virtueller Objekte oder von Raumbegrenzungen, beispielsweise hinsichtlich ihrer Reflexions-, Absorptions- und/oder Schallleitungseigenschaften simuliert werden. Somit können in die erzeugten Gesamtraumklänge noch weitere, die Realitätsnähe steigernde Effekte implementiert werden. Dabei wirkt sich besonders vorteilhaft aus, dass aufgrund des erfindungsgemäßen Verfahrens nur vergleichsweise wenige Raumklänge erzeugt werden müssen, so dass jeder Raumklang auch mit hoher bzw. höchstmöglicher Qualität trotz dadurch erhöhten Rechenaufwandes erstellt werden kann.

In den Rahmen der Erfindung fällt auch eine Verwendung des erfindungsgemäßen Verfahrens in einem Multimediasystem für wenigstens zwei Nutzer, insbesondere einem Telekonferenzsystem oder einem internetbasierten Viel-Spieler-System. Multimediasysteme für mehrere Nutzer können beispielsweise als webbasierte audiovisuelle Systeme ausgebildet sein. Bei diesen ist oftmals vorgesehen, dass einem realen Endpunkt, beispielsweise einer mit einer Audio-Wiedergabeeinheit, insbesondere Lautsprechern, ausgestatteten Rechnereinheit, ein Audiosignal zugeordnet ist. Das Audiosignal kann aus einer Tonaufnahme einer Audio-Aufnahmeeinheit der Rechnereinheit stammen oder in der Rechnereinheit und/oder in einer Zentraleinheit des Multimediasystems, z. B. einem zentralen Internetserver, als dem realen Endpunkt zugeordnetes Audiosignal erzeugt werden. Beispielsweise kann das Audiosignal einem Geräusch eines dem realen Endpunkt zugeordneten virtuellen Objekts, das in einem virtuellen Raum angeordnet ist, entsprechen.

Dann kann das erfindungsgemäße Verfahren verwendet werden, um auf Basis der Audiosignale Gesamtraumklänge mit hoher Realitätsnähe zu erzeugen und diese an andere reale Endpunkte des Multimediasystems effizient zu übermitteln.

In den Rahmen der Erfindung fällt des Weiteren ein Telekonferenzsystem mit wenigstens drei Telekonferenzendpunkten, wobei jeder der Telekonferenzendpunkte eine Audio-Wiedergabeeinheit und eine Audio-Aufnahmeeinheit aufweist, wobei das Telekonferenzsystem eingerichtet ist, ein erstes und ein zweites Audiosignal, beispielsweise eines ersten und eines zweiten Teilnehmers, über die Audio-Aufnahmeeinheiten eines ersten und eines zweiten Telekonferenzendpunkts aufzunehmen, wobei das Telekonferenzsystem eingerichtet ist, einen Gesamtraumklang gemäß dem erfindungsgemäßen Verfahren aus dem ersten und dem zweiten Audiosignal zu erzeugen, an einen dritten Telekonferenzendpunkt, beispielsweise eines dritten Teilnehmers, zu übermitteln und über dessen Audio-Wiedergabeeinheit auszugeben, wobei jeder Telekonferenzendpunkt einem realen Endpunkt im Sinne des Verfahrens entspricht.

Ein solches Telekonferenzsystem ist geeignet, das erfindungsgemäße Verfahren anzuwenden und somit bei einer Telekonferenz die hierzu benötigten Rechen- und/oder Übertragungskapazitäten drastisch zu reduzieren, gleichzeitig jedoch hohen Qualitätsansprüchen bezüglich der gebildeten Gesamtraumklänge zu genügen.

Besonders bevorzugt ist es, wenn das Telekonferenzsystem eine Moderationseinheit aufweist, die eingerichtet ist, wenigstens ein Audiosignal, einen Raumklang und/oder einen Gesamtraumklang zu aktivieren, zu deaktivieren, zu verstärken und/oder abzuschwächen. Somit kann eine über das Telekonferenzsystem geführte Telekonferenz mittels einer oder mehrerer Moderationseinheiten moderiert werden. Beispielsweise können somit Teilnehmer der Telekonferenz zugeschaltet oder ausgeblendet werden und/oder können innerhalb einer Telekonferenz Subgruppen von Teilnehmern gebildet werden, sodass eine Subgruppe beispielsweise zeitweise akustisch von einer anderen Subgruppe getrennt werden kann.

Insbesondere kann vorgesehen sein, dass das Telekonferenzsystem als Videokonferenzsystem, bevorzugt als Webkonferenzsystem, ausgebildet ist, wobei bevorzugt jeder Telekonferenzendpunkt eine Bildwiedergabeeinheit aufweist. Das Webkonferenzsystem kann insbesondere als browserbasiertes Webkonferenzsystem ausgebildet sein. Ein Webkonferenzsytem ermöglicht es, beispielsweise über einen Browser, der auf der jeweiligen Rechnereinheit ausführbar installiert ist, an einer mittels des Webkonferenzsystems hergestellten Webkonferenz teilnehmen zu können. Insbesondere kann vorgesehen sein, dass das Telekonferenzsystem eine Computerprogrammkomponente aufweist, die mittels eines Browsers herunterladbar und/oder ausführbar ausgebildet ist. Somit kann die Computerprogrammkomponente auf einfache Weise beispielsweise von einer Zentraleinheit heruntergeladen werden und, ohne dass weitere Installationen oder Veränderungen an der Rechnereinheit erforderlich wären, kann dann an einer Webkonferenz teilgenommen werden.

Besonders bevorzugt ist es, wenn das Telekonferenzsystem eingerichtet ist, mittels der Bildwiedergabeeinheit des dritten Telekonferenzendpunkts den virtuellen Raum darzustellen, wobei jeweils ein dem ersten und dem zweiten Teilnehmer zugeordnetes erstes und zweites virtuelles Objekt an den definierten Positionen innerhalb des virtuellen Raums dargestellt werden, die dem ersten bzw. zweiten Telekonferenzendpunkt zugeordnet sind und ein dem dritten Teilnehmer zugeordnetes drittes virtuelles Objekt an der Standard-Empfängerposition dargestellt wird.

Somit kann für einen Teilnehmer bzw. Nutzer eines Telekonferenzendpunktes bzw. Empfängers des zugeordneten Gesamtraumklangs der geschaffene akustische Eindruck um einen hierzu passenden visuellen Eindruck bereichert werden. Somit kann ein Eindruck einer virtuellen Realität weiter gesteigert werden.

Weitere Merkmale und Vorteile der Erfindung ergeben sich aus der nachfolgenden detaillierten Beschreibung von Varianten des erfindungsgemäßen Verfahrens sowie von Ausführungsbeispielen der Gegenstände der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Varianten und Ausführungsbeispiele der Erfindung dargestellt und werden in der nachfolgenden Beschreibung näher erläutert.

Es zeigen:
- Fig. 1: eine Telekonferenz mit drei Teilnehmern gemäß dem Stand der Technik;
- Fig. 2: eine Telekonferenz, bei der das erfindungsgemäße Verfahren zum Einsatz kommt;
- Fig. 3: ein erfindungsgemäßes Telekonferenzsystem;
- Fig. 4a und Fig.4b: Telekonferenzendpunkte des Telekonferenzsystems der Fig. 3 zweier verschiedener Teilnehmer.

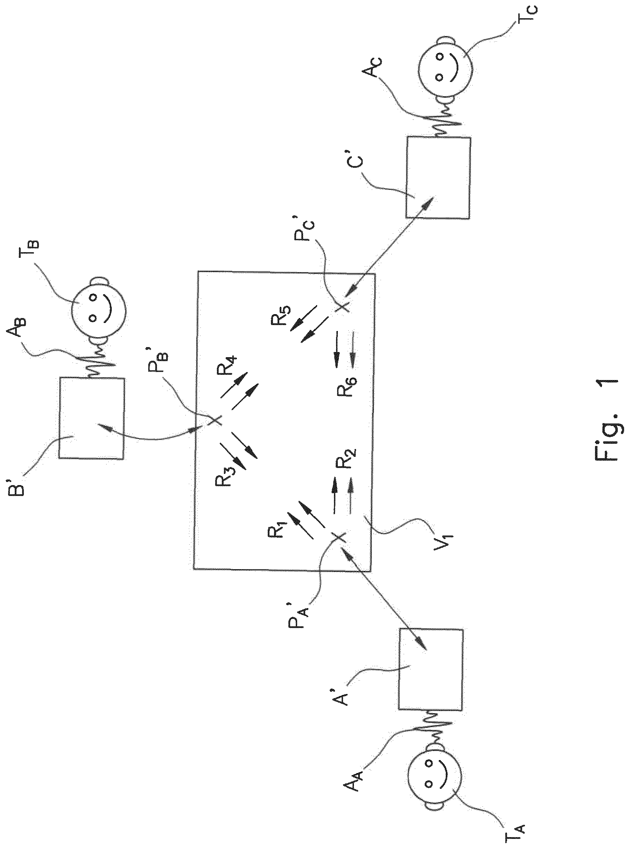

Fig. 1 stellt schematisch die Funktionsweise eines Telekonferenzsystems im Stand der Technik dar. Beispielhaft nehmen an einer Telekonferenz drei Teilnehmer T_{A}, T_{B}, T_{C} teil. Die Teilnehmer T_{A}, T_{B}, T_{C} nutzen jeweils Telekonferenzendpunkte A', B', C'.

Den Telekonferenzendpunkten A', B', C' sind in einem virtuellen Raum V₁ jeweils Positionen P_{A'}, P_{B'}, P_{C'} zugeordnet. Um eine Telekonferenz durchzuführen, nehmen zunächst die Telekonferenzendpunkte A', B', C jeweils ihnen zugeordnete Audiosignale A_{A}, A_{B}, A_{C}, beispielsweise monophone Sprachsignale, von die Telekonferenzendpunkte A', B', C' nutzenden Teilnehmern T_{A}, T_{B}, T_{C}, beispielsweise über Mikrofone, auf. Anschließend werden geeignete Raumklänge R₁ bis R₆ erzeugt und an die jeweils anderen (empfangenden) Telekonferenzendpunkte A', B', C übermittelt. Dort werden die Raumklänge R₁ bis R₆ den Teilnehmern T_{A}, T_{B}, T_{C}, beispielsweise über Stereokopfhörer, präsentiert. Dabei sollen die Raumklänge R₁ bis R₆ ausgebildet sein, den Teilnehmern T_{A}, T_{B}, T_{C} einen Raumklangeindruck zu verschaffen, als ob die Audiosignale A_{A}, A_{B}, A_{C} scheinbar im virtuellen Raum V₁ von den den jeweils anderen Telekonferenzendpunkten A', B', C' zugeordneten Positionen P_{A'}, P_{B'}, P_{C'} zu den jeweils eigenen Position P_{A'}, P_{B'} oder P_{C'} gelangen würden.

Wie der Fig. 1 unschwer zu entnehmen ist, müssen dazu im Stand der Technik bereits bei nur drei Teilnehmern T_{A}, T_{B}, T_{C} die insgesamt 6 Raumklänge R₁ bis R₆ erzeugt werden, wobei jeder der Raumklänge R₁ bis R₆ jeweils mindestens einen linken und einen rechten Kanal umfasst.

Somit müssen bereits bei nur drei Teilnehmern T_{A}, T_{B}, T_{C} bzw. Telekonferenzendpunkten A', B', C' insgesamt 12 Raumklang-Kanäle bzw. -Einzelsignale berechnet und übertragen werden. Dabei wächst der Rechenaufwand näherungsweise quadratisch mit der Anzahl der Telekonferenzendpunkte.

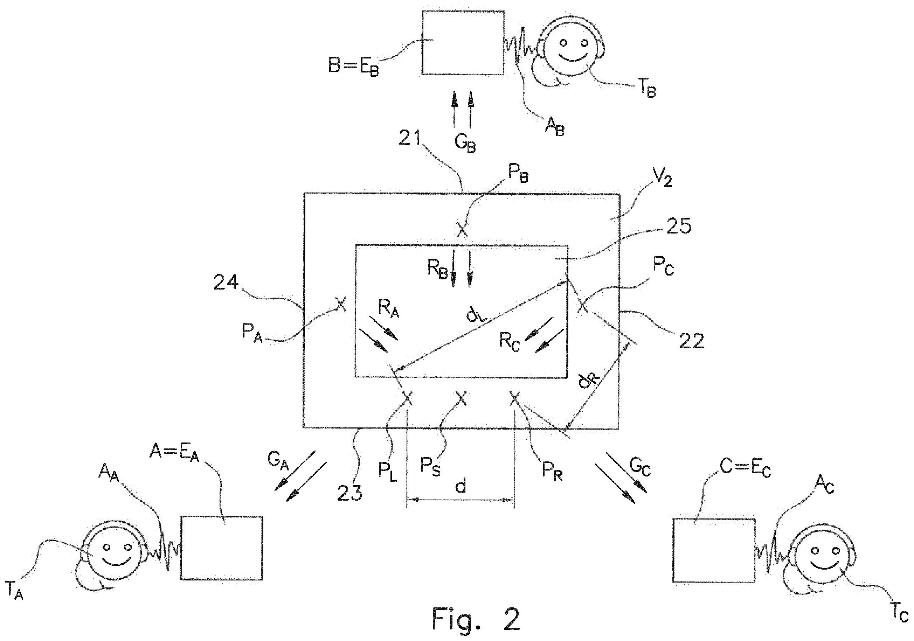

Dieser hohe Berechnungs- und Übertragungsaufwand lässt sich drastisch reduzieren, indem das erfindungsgemäße Verfahren zum Einsatz kommt. Dies soll nun anhand der Fig. 2 am Beispiel einer durchzuführenden Telekonferenz näher erläutert werden.

In der Fig. 2 ist schematisch eine Telekonferenz dargestellt, an der die drei Teilnehmer T_{A}, T_{B}, T_{C} über 3 Telekonferenzendpunkte A, B, C teilnehmen. Die Telekonferenzendpunkte A, B, C stellen reale Endpunkte E_{A}, E_{B}, E_{C} im Sinne des erfindungsgemäßen Verfahrens dar. Wiederum sind den Telekonferenzendpunkten A, B, C jeweils die Audiosignale A_{A}, A_{B}, A_{C} zugeordnet.

Zunächst wird eine Standard-Empfängerposition P_{S} innerhalb eines virtuellen Raums V₂ festgelegt.

Anschließend werden den Telekonferenzendpunkten A, B, C definierte Positionen P_{A}, P_{B}, P_{C} im virtuellen Raum V₂ zugeordnet.

In der Fig. 2 ist der Fall dargestellt, bei dem der Telekonferenzendpunkt A die Audiosignale A_{B} und A_{C} in Form eines Gesamtraumklanges G_{A} von den beiden anderen Telekonferenzendpunkten B, C empfangen soll. In dem hier dargestellten Fall ist daher der Gesamtraumklang G_{A} derart zu erzeugen und an den Telekonferenzendpunkt A zu übermitteln, dass ein Raumklangeindruck entsteht, als ob die Audiosignale A_{B} und A_{C} von den definierten Positionen P_{B}, P_{C} zur Standard-Empfängerposition P_{S} gesendet und dort empfangen würden. Analog zum für diesen Fall dargestellten Vorgehen werden Gesamtraumklänge G_{B} und G_{C} für die Telekonferenzendpunkte B, C gebildet, indem die definierten Positionen P_{A}, P_{C} (für Telekonferenzendpunkt B) bzw. P_{A}, P_{B} (für Telekonferenzendpunkt C) jeweils in Zusammenhang mit der Standard-Empfängerposition P_{S} zugrunde gelegt werden.

Dazu werden in einem weiteren Verfahrensschritt zumindest für die Telekonferenzendpunkte B und C Raumklänge R_{B}, R_{C} auf Basis des jeweils zugeordneten Audiosignals A_{B} bzw. A_{C}, der zugeordneten definierten Positionen P_{B}, P_{C} und der Standard-Empfängerposition P_{S} erzeugt.

Sofern auch die Gesamtraumklänge G_{B} und/oder G_{C} erzeugt werden sollen, werden zur Effizienzsteigerung analog ein Raumklang R_{A} erzeugt und die Raumklänge R_{C} (für Gesamtraumklang G_{B}) und R_{B} (für Gesamtraumklang G_{C}) wiederverwendet, das heißt ohne Neuberechnung erneut genutzt. Sofern bereits erzeugt, wird auch der Raumklang R_{A}, wiederverwendet.

Am Beispiel des Raumklangs R_{C} soll nun die Erzeugung der Raumklänge R_{A}, R_{B} bzw. R_{C} näher erläutert werden.

Zunächst einmal wird das Audiosignal Ac paketweise vorselektiert. Dazu wird das Audiosignal A_{C} in Einzelpakete zerlegt. Innerhalb jedes Einzelpaketes wird geprüft, ob ein vorgegebener Mindest-Schallpegel erreicht wird. Ist dies nicht der Fall, wird dieses Einzelpaket durch ein zeitlich gleich langes Nullsignal ersetzt, anderenfalls wird das Einzelpaket unverändert weiterverarbeitet. Somit können nicht benötigte etwaige Hintergrundgeräusche minimiert werden und gleichzeitig der benötigte spätere Verarbeitungs- bzw. Rechenaufwand weiter reduziert werden.

In der Fig.2 ist nun zu erkennen, dass der Standard-Empfängerposition P_{S} innerhalb des virtuellen Raums V₂ zwei weitere Positionen P_{L} bzw. P_{R} zugeordnet bzw. zuvor definiert sind. Diese sind voneinander mit einer Distanz d beabstandet.

Somit ergeben sich innerhalb des virtuellen Raums unterschiedliche Distanzen d_{L} und d_{R} der Positionen P_{L} und P_{R} zur dem Telekonferenzendpunkt C zugeordneten Position P_{C}.

Ein sich virtuell von der Position P_{C} ausbreitendes Audiosignal würde somit entsprechend einer geeignet gewählten Schallgeschwindigkeit mit einer interauralen Laufzeitdifferenz ILD, mit anderen Worten proportional zum Unterschied der Distanzen d_{L} und d_{R}, an den Positionen P_{L} bzw. P_{R} eintreffen.

Auch würde das Audiosignal aufgrund der Ausbreitung mit unterschiedlichen Schallpegeln an den Positionen P_{L} bzw. P_{R} eintreffen, es ergäbe sich somit auch eine interaurale Pegeldifferenz IPD.

Daher wird der Raumklang R_{C} in dieser Verfahrensvariante gebildet, indem das Audiosignal A_{C} zeitversetzt um die sich ergebende interaurale Laufzeitdifferenz ILD und mit unterschiedlichen Schallpegeln entsprechend der sich ergebenden interauralen Pegeldifferenz IPD in einen linken und einen rechten Kanal des zu erzeugenden Raumklangs R_{C} eingespeist bzw. für die beiden Kanäle berechnet werden.

Zusätzlich werden beide Kanäle des Raumklangs R_{C} mittels einer anhand der Positionen P_{L}, P_{R} und P_{C} geeignet gewählten Head-Related Transfer Function gefiltert.

In dieser Verfahrensvariante werden zur Verbesserung eines Raumklangeindrucks dem Raumklang R_{C} noch weitere Effekte hinzugefügt bzw. in diesen eingeprägt.

Insbesondere werden Echo- und Nachhalleffekte dem Raumklang R_{C} entsprechend einer geeignet gewählten Ausgestaltung des virtuellen Raums V₂ hinzugefügt, um auch scheinbare nicht-direkte akustische Verbindungen zwischen den Positionen P_{L}, P_{R} und P_{C} zur RaumklangErzeugung zu berücksichtigen. Insbesondere werden dafür vorab Begrenzungen 21, 22, 23, 24 des virtuellen Raums V₂, beispielsweise virtuelle Wände, Decken und Böden, sowie virtuelle Gegenstände, beispielsweise ein virtueller Konferenztisch 25, in Abhängigkeit einer gewünschten Ausgestaltung vordefiniert und innerhalb des virtuellen Raums V₂ positioniert. Zudem werden vorab den Begrenzungen 21, 22, 23, 24 und den virtuellen Gegenständen geeignete Klangeigenschaften, insbesondere akustische Reflexions- und Absorptionseigenschaften zugeordnet, gemäß derer nachfolgend die Echo- und Nachhalleffekte erzeugt bzw. eingestellt werden.

In einem weiteren Verfahrensschritt wird der Gesamtraumklang G_{A} für den Telekonferenzendpunkt A aus den erzeugten Raumklänge R_{B}, R_{C}, das heißt aus allen Raumklängen R_{A}, R_{B}, R_{C} mit Ausnahme des "eigenen" Raumklangs R_{A}, durch kanalweise Addition der beiden Raumklänge erzeugt.

In einem letzten Verfahrensschritt wird der Gesamtraumklang G_{A} an den Telekonferenzendpunkt A übermittelt und über Stereo-Kopfhörer des Telekonferenzendpunkts A dem Teilnehmer T_{A} präsentiert.

Da es somit nur der Erzeugung von drei Raumklängen R_{A}, R_{B}, R_{C} bedarf, wird verfahrensgemäß auf diese Weise im Vergleich zum Stand der Technik wesentlich Rechenkapazität eingespart. Zudem steigt der Rechenbedarf lediglich näherungsweise linear mit der Anzahl von Telekonferenzendpunkten an.

Des Weiteren ist der Fig. 2 der Gedanke des erfinderischen Verfahrens zu entnehmen, dass die scheinbare Abstrahlung der Audiosignale A_{A}, A_{B}, A_{C} bzw. der Raumklänge R_{A}, R_{B}, R_{C} räumlich getrennt wird vom scheinbaren Empfang der Gesamtraumklänge G_{A}, G_{B}, G_{C}, der erfindungsgemäß an der Standard-Empfängerposition P_{S} verortet bleibt.

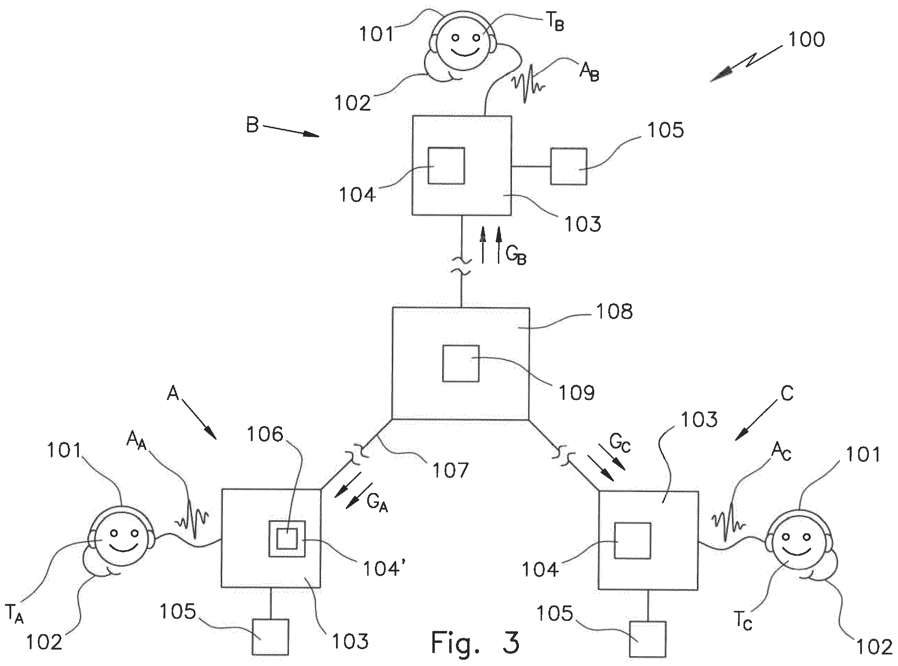

In der Fig. 3 ist nun ein erfindungsgemäßes Telekonferenzsystem 100 dargestellt.

Der Fig. 3 ist zu entnehmen, dass wiederum den Teilnehmern T_{A}, T_{B}, T_{C} Telekonferenzendpunkte A, B, C zugeordnet sind. Die Telekonferenzendpunkte A, B, C entsprechen dabei realen Endpunkten E_{A}, E_{B}, E_{C} des erfinderischen Verfahrens. Weitere Teilnehmer bzw. Telekonferenzendpunkte können dem Telekonferenzsystem 100 nach Belieben hinzugefügt werden; die Anzahl von 3 Teilnehmern bzw. Telekonferenzendpunkten ist hier nur beispielhaft gewählt.

Die Telekonferenzendpunkte A, B, C weisen jeweils eine Audio-Wiedergabeeinheit 101 und eine Audio-Aufnahmeeinheit 102 auf. Die Audio-Wiedergabeeinheit 101 und die Audio-Aufnahmeeinheit 102 sind dabei in diesem Ausführungsbeispiel als Headset, d. h. als Kopfhörer und als Mikrofone, ausgebildet. Die Audio-Wiedergabeeinheiten 101 bzw. die Audio-Aufnahmeeinheit 102 sind mit jeweils einer Rechnereinheit 103 des jeweiligen Telekonferenzendpunkts A, B bzw. C verbunden. Über die Audio-Aufnahmeeinheiten 102 werden Audiosignale A_{A}, A_{B}, A_{C}, insbesondere Sprachsignale der Teilnehmer T_{A}, T_{B}, T_{C}, aufgenommen.

Des Weiteren sind die Telekonferenzendpunkten A, B, C mittels ihrer Rechnereinheiten 103 mit einer als Rechenserver ausgebildeten Zentraleinheit 108 datentechnisch, insbesondere über ein Kommunikationsnetz, in diesem Fall das Internet, verbunden.

Die Zentraleinheit 108 empfängt von den Telekonferenzendpunkten A, B, C die Audiosignale A_{A}, A_{B}, A_{C}, erzeugt aus diesen die Gesamtraumklänge G_{A}, G_{B}, G_{C} und übermittelt diese an die jeweiligen Telekonferenzendpunkte A, B, C zur Wiedergabe bzw. Präsentation über die jeweiligen Audio-Wiedergabeeinheiten 101. Die Verarbeitung der Audiosignale A_{A}, A_{B}, A_{C} erfolgt dabei mittels einer Zentral-Computerprogrammkomponente 109 auf, die in der Zentraleinheit 108 ausführbar installiert ist.

Das Telekonferenzsystem 100 ist insbesondere als Webkonferenzsystem ausgebildet. Dazu sind auf den Rechnereinheiten 103 der Telekonferenzendpunkte B und C jeweils Instanzen einer Endpunktcomputerprogrammkomponente 104 ausführbar installiert.

Auf dem Telefonkonferenzendpunkt A ist eine Instanz einer Endpunktcomputerprogrammkomponente 104' ausführbar installiert. Die Endpunktcomputerprogrammkomponente 104' entspricht der Endpunktcomputerprogrammkomponente 104 mit dem Unterschied, dass sie zusätzlich eine Moderationseinheit 106 aufweist.

Insbesondere können diese Instanzen einer Endpunktcomputerprogrammkomponente 104' mittels eines auf den Rechnereinheiten 103 ausführbar installierten Browsers ausgeführt werden. Die Endpunktcomputerprogrammkomponenten 104' sind zudem durch die Rechnereinheiten 103 herunterladbar auf der Zentraleinheit 108 installiert, sodass eine Nutzung des Telekonferenzsystems 100 auf einfache Weise dadurch ermöglicht wird, dass die Endpunktcomputerprogrammkomponenten 104' von der Zentraleinheit 108 mittels des Browsers auf die Rechnereinheiten 103 heruntergeladen und dort ausgeführt werden.

Die Moderationseinheit 106 ist ausgestaltet, Einstellmöglichkeiten zu bieten, mit denen ein Teilnehmer jeweils einzelne der Audiosignale A_{A}, A_{B}, A_{C} verstärken abschwächen kann sowie generell zu aktivieren bzw. zu deaktivieren in der Lage ist. Dazu werden die jeweils gewählten Einstellungen durch die Moderationseinheit 106 vermittels der jeweiligen Rechnereinheiten 103 an die Zentraleinheit 108 gesendet, die die von ihr empfangenen Audiosignale A_{A}, A_{B}, A_{C} vor Einsatz des erfindungsgemäßen Verfahrens entsprechend verstärkt, abschwächt und/oder auswählt.

Somit können über diese Einstellmöglichkeiten beispielsweise temporär Subgruppen von Teilnehmern der Telekonferenz gebildet werden, zwischen denen zumindest temporär keine Audiosignale A_{A}, A_{B}, A_{C} ausgetauscht werden. In diesem Ausführungsbeispiel hat somit der Teilnehmer T_{A} Zugriff auf diese Einstellmöglichkeiten der auf dem ihm zugeordneten Telekonferenzpunkt A installierten Moderationseinheit 106. Somit stellt Teilnehmer T_{A} einen Moderator der Telekonferenz dar.

Des Weiteren sind der Fig. 3 Bildwiedergabeeinheiten 105 zu entnehmen, die mit den jeweiligen Rechnereinheiten 103 der Telekonferenzendpunkte A, B, C verbunden sind.

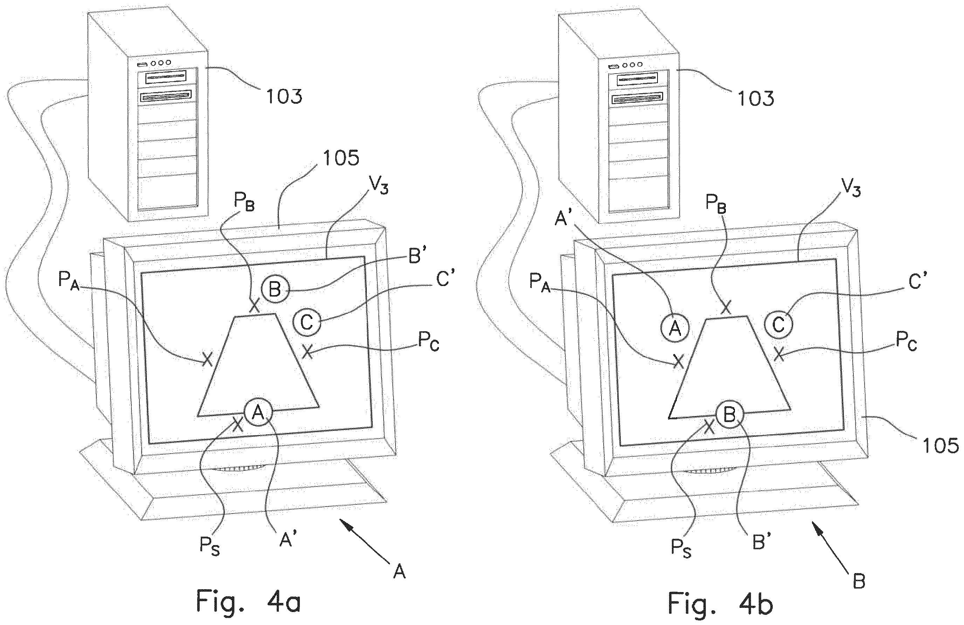

Beispielhaft zeigen die Fig. 4a und die Fig. 4b Bildschirmausgaben, wie sie den Teilnehmern T_{A} (Fig. 4a) bzw. T_{B} (Fig. 4b) über ihre Telekonferenzendpunkte A bzw. B präsentiert werden. Zu erkennen ist jeweils ein virtueller Raum V₃, in dem virtuelle Objekte A', B', C', in diesem Fall Avatare, an den den definierten Positionen P_{A}, P_{B}, P_{C} bzw. der Standard-Empfängerposition P_{S} entsprechenden graphischen Positionen innerhalb des virtuellen Raums V₃ angeordnet sind. Dabei befindet sich jeweils das dem jeweiligen Teilnehmer T_{A} bzw. T_{B} zugeordnete virtuelle Objekt A' bzw. B' an der der Standard-Empfängerposition P_{S} entsprechenden graphischen Position. Die jeweils anderen virtuellen Objekte B', C' bzw. A', C' befinden sich dagegen auf den Positionen P_{B} und P_{C} bzw. P_{A} und P_{C}. Somit wird ein dem auditiven Höreindruck entsprechender visueller Eindruck durch die Bildschirmausgaben der Bildwiedergabeeinheiten 105 für die jeweiligen Telekonferenzendpunkte A, B, C erzeugt.

## Patentansprüche

1. Verfahren zur Erzeugung eines an einen realen Endpunkt (EA, EB, EC) zu übermittelnden Gesamtraumklangs (GA, GB, GC), wobei dem realen Endpunkt (EA, EB, EC) ein Audiosignal (AA, AB, AC) zugeordnet ist, mit den Verfahrensschritten:
Festlegen einer Standard-Empfängerposition (PS) innerhalb eines virtuellen Raums (V2, V3),
Zuordnen jedes realen Endpunktes (EA, EB, EC) mit zugehörigem Audiosignal (AA, AB, AC) zu einer für jeden realen Endpunkt (EA, EB, EC) definierten Position (PA, PB, PC) innerhalb des virtuellen Raums (V2, V3), wobei das Zuordnen derart ausgeführt wird, dass die Position jedes realen Endpunkts (EA, EB, EC) von der Standard-Empfängerposition (PS) innerhalb des virtuellen Raums (V2, V3) verschieden ist,
für einen zweiten realen Endpunkt (EB), Erzeugen eines zweiten Raumklangs (RB) auf Basis des dem zweiten realen Endpunkt (EB) zugeordneten Audiosignals (AB), der dem zweiten realen Endpunkt (EB) zugeordneten definierten Position (PB) und der Standard-Empfängerposition (PS),
für einen dritten realen Endpunkt (EC), Erzeugen eines dritten Raumklangs (RC) auf Basis des dem dritten realen Endpunkt (EC) zugeordneten Audiosignals (AC), der dem dritten realen Endpunkt (EC) zugeordneten definierten Position (PC) und der Standard-Empfängerposition (PS),
wobei zumindest der zweite Raumklang (RB) oder der dritte Raumklang (RC) so erzeugt wird, als ob das entsprechende Audiosignal (AB, AC) von der entsprechenden definierten Position (PB, PC) abgestrahlt würde und an der Standard-Empfängerposition (PS) empfangen würde,
Erzeugen eines ersten Gesamtraumklangs (GA) für den ersten realen Endpunkt (EA) aus dem zweiten Raumklang (RB) und dem dritten Raumklang (RC) mit Ausnahme eines ersten Raumklangs (RA) des ersten realen Endpunkts (EA), und
Übermitteln des ersten Gesamtraumklangs (GA) an den ersten realen Endpunkt (EA).

2. Verfahren nach Anspruch 1, wobei Audiosignale (AA, AB, AC) gesamthaft und/oder paketweise vorselektiert werden.

3. Verfahren nach einem der vorhergehenden Ansprüche, wobei ein Raumklang (RA, RB, RC) mittels einer interauralen Laufzeitdifferenz und/oder einer interauralen Pegeldifferenz erzeugt wird.

4. Verfahren nach einem der vorhergehenden Ansprüche, wobei einem Audiosignal (AA, AB, AC), einem Raumklang (RA, RB, RC) und/oder einem Gesamtraumklang (GA, GB, GC) ein Echo- und/oder ein Nachhall-Effekt in Abhängigkeit wenigstens einer definierten Position (PA, PB, PC) hinzugefügt wird, oder
wobei ein Audiosignal (AA, AB, AC) und/oder ein Raumklang (RA, RB, RC) und/oder ein Gesamtraumklang (GA, GB, GC) mittels einer Head-Related Transfer Function gefiltert werden.

5. Verfahren nach Anspruch 4, wobei der Echo- und/oder der Nachhall-Effekt, beispielsweise zur Imitation unterschiedlicher Wand- oder Deckenmaterialien des virtuellen Raums (V2, V3), eingestellt werden.

6. Verfahren nach Anspruch 1,
bei dem der erste Raumklang (RA) auf der Basis des ersten Audiosignals (AA) und der Standard-Empfängerposition (PS) erzeugt wird,
bei dem der zweiter Raumklang (RB) auf der Basis des zweiten Audiosignals (AB) und der Standard-Empfängerposition (PS) erzeugt wird,
bei dem der dritte Raumklang (RC) auf der Basis des dritten Audiosignals (AA) und der Standard-Empfängerposition (PS) erzeugt wird,
wobei ein zweiter Gesamtraumklang (GB) für den zweiten realen Endpunkt (EB) unter Verwendung des ersten Raumklangs (RA) und des dritten Raumklangs (RC) erzeugt wird,
wobei ein dritter Gesamtraumklang (GC) für den dritten realen Endpunkt (EC) unter Verwendung des ersten Raumklangs (RA) und des zweiten Raumklangs (RB) erzeugt wird,
wobei der erste Gesamtraumklang (GA) für den ersten realen Endpunkt (EA) unter Verwendung des zweiten Raumklangs (RB) und des dritten Raumklangs (RC) erzeugt wird, und
wobei für die Berechnung der Gesamtraumklänge (GA, GB, GC) die erzeugten Raumklänge (RA, RB, RC) wiederverwendet werden.

7. Verfahren nach Anspruch 1,
bei dem der Standard-Empfängerposition (PS) innerhalb des virtuellen Raums (V2, V3) zwei weitere Positionen (PL, PR) zugeordnet sind, die um eine Distanz (d) voneinander beabstandet sind, wobei unterschiedliche Distanzen (dL, dR) zwischen den zwei weiteren Positionen (PL, PR) und der definierten Position (PC) innerhalb des virtuellen Raums (V2, V3) vorhanden sind, und
wobei der Raumklang (RC, RA, RB) für die definierten Position (PC, PA, PB) gebildet wird, indem das Audiosignal (AC, AA, AB) für den der definierten Position (PC) zugeordneten realen Endpunkt (EC, EA, EB) zeitversetzt um eine sich ergebende interaurale Laufzeitdifferenz und mit unterschiedlichen Schallpegeln entsprechend einer sich ergebenden interauralen Pegeldifferenz für einen linken und einen rechten Kanal des zu erzeugenden Raumklangs (RC) berechnet wird.

8. Verfahren nach Anspruch 7,
wobei ein zweiter Gesamtraumklang (GB) für den zweiten realen Endpunkt (EB) durch kanalweise Addition des ersten Raumklangs (RA) und des dritten Raumklangs (RC) erzeugt wird,
wobei ein dritter Gesamtraumklang (GC) für den dritten realen Endpunkt (EC) durch kanalweise Addition des ersten Raumklangs (RA) und des zweiten Raumklangs (RB) erzeugt wird, und
wobei der erste Gesamtraumklang (GA) für den ersten realen Endpunkt (EA) durch kanalweise Addition des zweiten Raumklangs (RB) und des dritten Raumklangs (RC) erzeugt wird.

9. Verfahren nach Anspruch 1, bei dem ein scheinbarer Empfang der Gesamtraumklänge (GA, GB, GC) für jeden realen Endpunkt (EA, EB, EC) an der Standard-Empfängerposition (PS) verortet ist.

10. Verfahren nach Anspruch 1, bei dem der erste Gesamtraumklang (GA) derart erzeugt wird, dass an dem ersten realen Endpunkt (EA) ein Raumklangeindruck entsteht, als ob das zweite Audiosignal (AB) von der zweiten definierten Position (PB) innerhalb des virtuellen Raums (V2, V3) an die Standard-Empfängerposition (PS) gesendet und dort empfangen wird und das dritte Audiosignal (AC) von der dritten definierten Position (PC) innerhalb des virtuellen Raums (V2, V3) an die Standard-Empfängerposition (PS) gesendet und dort empfangen wird.

11. Verwendung des Verfahrens nach einem der vorhergehenden Ansprüche in einem Multimediasystem für wenigstens zwei Nutzer, insbesondere einem Telekonferenzsystem (100) oder einem internetbasierten Viel-Spieler-System.

12. Telekonferenzsystem (100) mit wenigstens drei Telekonferenzendpunkten (A, B, C), wobei jeder der Telekonferenzendpunkte (A, B, C) eine Audio-Wiedergabeeinheit (101) und eine Audio-Aufnahmeeinheit (102) aufweist, wobei das Telekonferenzsystem (100) eingerichtet ist, ein erstes und ein zweites Audiosignal (AA, AB, AC), beispielsweise eines ersten und eines zweiten Teilnehmers (TA, TB, TC), über die Audio-Aufnahmeeinheiten (102) eines ersten und eines zweiten Telekonferenzendpunkts (A, B, C) aufzunehmen,
wobei das Telekonferenzsystem (100) eingerichtet ist,
einen Gesamtraumklang (GC) gemäß einem Verfahren nach einem der vorhergehenden Ansprüche 1 bis 10 aus dem ersten und dem zweiten Audiosignal (AA, AB, AC) zu erzeugen,
an einen dritten Telekonferenzendpunkt (A, B, C), beispielsweise eines dritten Teilnehmers (TA, TB, TC), zu übermitteln, und
über dessen Audio-Wiedergabeeinheit (101) auszugeben,
wobei jeder Telekonferenzendpunkt (A, B, C) einem realen Endpunkt (EA, EB, EC) im Sinne des Verfahrens entspricht.

13. Telekonferenzsystem nach Anspruch 12, wobei das Telekonferenzsystem (100) eine Moderationseinheit (106) aufweist, die eingerichtet ist, wenigstens ein Audiosignal (AA, AB, AC), einen Raumklang (RA, RB, RC) und/oder einen Gesamtraumklang (GA, GB, GC) zu aktivieren, zu deaktivieren, zu verstärken und/oder abzuschwächen.

14. Telekonferenzsystem (100) nach einem der Ansprüche 12 oder 13, wobei das Telekonferenzsystem (100) als Videokonferenzsystem, bevorzugt als Webkonferenzsystem, ausgebildet ist, wobei bevorzugt jeder Telekonferenzendpunkt (A, B, C) eine Bildwiedergabeeinheit (105) aufweist.

15. Telekonferenzsystem nach einem der vorhergehenden Ansprüche 12 bis 13,
wobei das Telekonferenzsystem (100) eingerichtet ist, mittels der Bildwiedergabeeinheit (105) des dritten Telekonferenzendpunkts (C) den virtuellen Raum (V2, V3) darzustellen, wobei jeweils ein dem ersten und dem zweiten Teilnehmer (TA, TB) zugeordnetes erstes und zweites virtuelles Objekt an den definierten Positionen (PA, PB) innerhalb des virtuellen Raums (V2, V3) dargestellt werden, die dem ersten bzw. zweiten Telekonferenzendpunkt (A, B) zugeordnet sind, und ein dem dritten Teilnehmer (TC) zugeordnetes drittes virtuelles Objekt an der Standard-Empfängerposition (PS) dargestellt wird.

16. Telekonferenzsystem nach Anspruch 15,
wobei das Telekonferenzsystem (100) eingerichtet ist, mittels der Bildwiedergabeeinheit (105) des zweiten Telekonferenzendpunkts (B) den virtuellen Raum (V2, V3) darzustellen, wobei jeweils ein dem ersten und dem dritten Teilnehmer (TA, TC) zugeordnetes erstes und drittes virtuelles Objekt an den definierten Positionen (PA, PC) innerhalb des virtuellen Raums (V2, V3) dargestellt werden, die dem ersten bzw. dritten Telekonferenzendpunkt (A, C) zugeordnet sind, und ein dem zweiten Teilnehmer (TB) zugeordnetes zweites virtuelles Objekt an der Standard-Empfängerposition (PS) dargestellt wird, oder
wobei das Telekonferenzsystem (100) eingerichtet ist, mittels der Bildwiedergabeeinheit (105) des ersten Telekonferenzendpunkts (A) den virtuellen Raum (V2, V3) darzustellen, wobei jeweils ein dem zweiten und dem dritten Teilnehmer (TB, TC) zugeordnetes zweites und drittes virtuelles Objekt an den definierten Positionen (PB, PC) innerhalb des virtuellen Raums (V2, V3) dargestellt werden, die dem zweiten bzw. dritten Telekonferenzendpunkt (B, C) zugeordnet sind, und ein dem ersten Teilnehmer (TA) zugeordnetes erstes virtuelles Objekt an der Standard-Empfängerposition (PS) dargestellt wird.

## Claims

1. A method of generating an overall spatial sound (GA, GB, GC) to be transmitted to a real terminal point (EA, EB, EC), an audio signal (AA, AB, AC) being associated to the real terminal point (EA, EB, EC), comprising the steps of:
determining a standard receiver position (PS) within a virtual space (V2, V3),
associating each real terminal point (EA, EB, EC) including a respective audio signal (AA, AB, AC) to a position (PA, PB, PC) within the virtual space (V2, V3) defined for each real terminal point (EA, EB, EC), wherein associating is performed such that the position of each real terminal point (EA, EB, EC) is different from the standard receiver position (PS) within the virtual space (V2, V3),
for a second real terminal point (EB), generating a second spatial sound (RB) based on the audio signal (AB) associated to the second real terminal point (EB), the defined position (PB) associated to the second real terminal point (EB), and the standard receiver positon (PS),
for a third real terminal point (EC), generating a third spatial sound (RC) based on the audio signal (AC) associated to the third real terminal point (EC), the defined position (PC) associated to the third real terminal point (EC), and the standard receiver position (PS),
wherein at least the second spatial sound (RB) or the third spatial sound (RC) is generated as if the corresponding audio signal (AV, AC) was emitted from the corresponding defined position (PB, PC) and received at the standard receiver position (PS),
generating a first overall spatial sound (GA) for the first real terminal point (EA) from the second spatial sound (RB) and the third spatial sound (RC), except for a first spatial sound (RA) of the first real terminal point (EA), and
transmitting the first overall spatial sound (GA) to the first real terminal point (EA).

2. The method in accordance with claim 1, wherein audio signals (AA, AB, AC) are preselected as a whole and/or packet by packet.

3. The method in accordance with any of the preceding claims, wherein a spatial sound (RA, RB, RC) is generated by means of an interaural propagation time difference and/or an interaural level difference.

4. The method in accordance with any of the preceding claims, wherein an echo and/or reverberation effect is added to an audio signal (AA, AB, AC), a spatial sound (RA, RB, RC) and/or an overall spatial sound (GA, GB, GC) in dependence on at least one defined position (PA, PB, PC), or
wherein an audio signal (AA, AB, AC) and/or a spatial sound (RA, RB, RC) and/or an overall spatial sound (GA, GB, GC) is filtered by means of a head-related transfer function.

5. The method in accordance with claim 4, wherein the echo and/or the reverberation effect is set, for example for imitating different wall or ceiling materials of the virtual space (V2, V3).

6. The method in accordance with claim 1,
wherein the first spatial sound (RA) is generated based on the first audio signal (AA) and the standard receiver position (PS),
wherein the second spatial sound (RB) is generated based on the second audio signal (AB) and the standard receiver position (PS),
wherein the third spatial sound (RC) is generated based on the third audio signal (AA) and the standard receiver position (PS),
wherein a second overall spatial sound (GB) for the second real terminal point (EB) is generated using the first spatial sound (RA) and the third spatial sound (RC), wherein a third overall spatial sound (GA) for the third real terminal point (EC) is generated using the first spatial sound (RA) and the second spatial sound (RB),
wherein the first overall spatial sound (GA) for the first real terminal point (EA) is generated using the second spatial sound (RB) and the third spatial sound (RC), and
wherein the generated spatial sounds (RA, RB, RC) are reused for calculating the overall spatial sounds (GA, GB, GC).

7. The method in accordance with claim 1,
wherein two further positions (PL, PR), which are spaced apart from each other by a distance (d), are associated to the standard receiver position (PS) within the virtual space (V2, V3), wherein there are different distances (dL, dR) between the two further positions (PL, PR) and the defined position (PC) within the virtual space (V2, V3), and
wherein the spatial sound (RC, RA, RB) for the defined position (PC, PA, PB) is formed by calculating the audio signal (AC, AA, AB) for the real terminal point (EC, EA, EB) associated to the defined position (PC) in a manner time-offset by a resulting interaural propagation time difference and with differing sound levels corresponding to the resulting interaural level difference for a left and a right channel of the spatial sound (RC) to be generated.

8. The method in accordance with claim 7,
wherein a second overall spatial sound (GB) for the second real terminal point (EB) is generated by adding, channel by channel, the first spatial sound (RA) and the third spatial sound (RC),
wherein a third overall spatial sound (GC) for the third real terminal point (EC) is generated by adding, channel by channel, the first spatial sound (RA) and the second spatial sound (RB), and
wherein the first overall spatial sound (GA) for the first real terminal point (EA) is generated by adding, channel by channel, the second spatial sound (RB) and the third spatial sound (RC).

9. The method in accordance with claim 1, wherein an apparent reception of the overall spatial sounds (GA, GB, GC) for each real terminal point (EA, EB, EC) is located at the standard receiver position (PS).

10. The method in accordance with claim 1, wherein the first overall spatial sound (GA) is generated such that such a spatial sound impression is formed at the first real terminal point (EA) as if the second audio signal (AB) was transmitted from the second defined position (PB) within the virtual space (V2, V3) to the standard receiver position (PS) and received there and the third audio signal (AC) was transmitted from the third defined position (PC) within the virtual space (V2, V3) to the standard receiver position (PS) and received there.

11. A use of the method in accordance with any of the preceding claims in a multimedia system for at least two users, in particular a teleconferencing system (100) or an Internet-based multi-player system.

12. A teleconferencing system (100) comprising at least three teleconferencing terminal points (A, B, C), each of the teleconferencing terminal points (A, B, C) comprising an audio reproduction unit (101) and an audio recording unit (102), the teleconferencing system (100) being configured to record a first and a second audio signal (AA, AB, AC), for example of a first and a second participant (TA, TB, TC), by the audio recording units (102) of a first and a second teleconferencing terminal points (A, B, C),
the teleconferencing system (100) being configured
to generate an overall spatial sound (GC) in accordance with a method in accordance with any of preceding claims 1 to 10 from the first and the second audio signals (AA, AB, AC),
to transmit the same to a third teleconferencing terminal point (A, B, C), for example of a third participant (TA, TB, TC), and
to output the same by means of the audio reproduction unit (101) thereof,
wherein each teleconferencing terminal point (A, B, C) corresponds to a real terminal point (EA, EB, EC) as defined by the method.

13. The teleconferencing system in accordance with claim 12, the teleconferencing system (100) comprising a moderation unit (106) configured to activate, deactivate, amplify and/or attenuating at least one of an audio signal (AA, AB, AC), a spatial sound (RA, RB, RC) and/or an overall spatial sound (GA, GB, GC).

14. The teleconferencing system (100) in accordance with any of claims 12 or 13, the teleconferencing system (100) being configured as a video conference system, preferably a web conference system, wherein preferably each teleconferencing terminal point (A, B, C) comprises an image reproduction unit (105).

15. The teleconferencing system in accordance with any of preceding claims 12 to 13,
the teleconferencing system (100) being configured to represent the virtual space (V2, V3) by means of the image reproduction unit (105) of the third teleconferencing terminal point (C), wherein a first and a second virtual object associated to the first and the second participant (TA, TB) are represented at the defined positions (PA, PB) within the virtual space (V2, V3), which are associated to the first and second teleconferencing terminal points (A, B), respectively, and a third virtual object associated to the third participant (TC) is represented at the standard receiver position (PS).

16. The teleconferencing system in accordance with claim 15,
the teleconferencing system (100) being configured to represent the virtual space (V2, V3) by means of the image reproduction unit (105) of the second teleconferencing terminal point (B), wherein a first and a third virtual object associated to the first and the third participant (TA, TC) are represented at the defined positions (PA, PC) within the virtual space (V2, V3), which are associated to the first and third teleconferencing terminal points (A, C), respectively, and a second virtual object associated to the second participant (TB) is represented at the standard receiver position (PS), or
the teleconferencing system (100) being configured to represent the virtual space (V2, V3) by means of the image reproduction unit (105) of the first teleconferencing terminal point (A), wherein a second and a third virtual object associated to the second and the third participant (TB, TC) are represented at the defined positions (PB, PC) within the virtual space (V2, V3), which are associated to the second and third teleconferencing terminal points (B, C), respectively, and a first virtual object associated to the first participant (TA) is represented at the standard receiver position (PS).

## Revendications

1. Procédé de génération d'un son ambiophonique global (GA, GB, GC) à transmettre à un point final réel (EA, EB, EC), dans lequel un signal audio (AA, AB, AC) est associé au point final réel (EA, EB, EC), aux étapes de procédé consistant à:
fixer une position de récepteur standard (PS) dans une salle virtuelle (V2, V3),
associer chaque point final réel (EA, EB, EC) avec le signal audio associé (AA, AB, AC) à une position définie (PA, PB, PC) pour chaque point final réel (EA, EB, EC) dans la salle virtuelle (V2, V3), où l'association est effectuée de sorte que la position de chaque point final réel (EA, EB, EC) soit différente de la position de récepteur standard (PS) dans la salle virtuelle (V2, V3),
pour un deuxième point final réel (EB), générer un deuxième son ambiophonique (RB) sur base du signal audio (AB) associé au deuxième point final réel (EB), de la position définie (PB) associée au deuxième point final réel (EB) et de la position de récepteur standard (PS),
pour un troisième point final réel (EC), générer un troisième son ambiophonique (RC) sur base du signal audio (AC) associé au troisième point final réel (EC), de la position définie (PC) associée au troisième point final réel (EC) et de la position de récepteur standard (PS),
dans lequel au moins le deuxième son ambiophonique (RB) ou le troisième son ambiophonique (RC) est généré comme si le signal audio (AB, AC) correspondant était émis à partir de la position définie (PB, PC) correspondante et était reçu à la position de récepteur standard (PS),
générer un premier son ambiophonique global (GA) pour le premier point final réel (EA) à partir du deuxième son ambiophonique (RB) et du troisième son ambiophonique (RC), à l'exception d'un premier son ambiophonique (RA) du premier point final réel (EA), et
transmettre le premier son ambiophonique global (GA) au premier point final réel (EA).

2. Procédé selon la revendication 1, dans lequel les signaux audio (AA, AB, AC) sont présélectionnés comme un ensemble et/ou par paquets.

3. Procédé selon l'une des revendications précédentes, dans lequel un son ambiophonique (RA, RB, RC) est généré au moyen d'une différence de temps de parcours interaural et/ou d'une différence de niveau interaural.

4. Procédé selon l'une des revendications précédentes, dans lequel un effet d'écho et/ou un effet de réverbération est ajouté à un signal audio (AA, AB, AC), à un son ambiophonique (RA, RB, RC) et/ou à un son ambiophonique global (GA, GB, GC) en fonction d'au moins une position définie (PA, PB, PC), ou
dans lequel un signal audio (AA, AB, AC) et/ou un son ambiophonique (RA, RB, RC) et/ou un son ambiophonique global (GA, GB, GC) sont filtrés au moyen d'une Fonction de Transfert par Rapport à la Tête.

5. Procédé selon la revendication 4, dans lequel l'effet d'écho et/ou l'effet de réverbération sont réglés, par exemple, pour imiter différents matériaux de mur ou de plafond de la salle virtuelle (V2, V3).

6. Procédé selon la revendication 1,
dans lequel le premier son ambiophonique (RA) est généré sur base du premier signal audio (AA) et de la position de récepteur standard (PS),
dans lequel le deuxième son ambiophonique (RB) est généré sur base du deuxième signal audio (AB) et de la position de récepteur standard (PS),
dans lequel le troisième son ambiophonique (RC) est généré sur base du troisième signal audio (AA) et de la position de récepteur standard (PS), dans lequel un deuxième son ambiophonique global (GB) pour le deuxième point final réel (EB) est généré à l'aide du premier son ambiophonique (RA) et du troisième son ambiophonique (RC),
dans lequel un troisième son ambiophonique global (GC) pour le troisième point final réel (EC) est généré à l'aide du premier son ambiophonique (RA) et du deuxième son ambiophonique (RB),
dans lequel le premier son ambiophonique global (GA) pour le premier point final réel (EA) est généré à l'aide du deuxième son ambiophonique (RB) et du troisième son ambiophonique (RC), et
dans lequel les sons ambiophoniques (RA, RB, RC) générés sont réutilisés pour le calcul des sons ambiophoniques globaux (GA, GB, GC).

7. Procédé selon la revendication 1,
dans lequel sont associées à la position de récepteur standard (PS) dans la salle virtuelle (V2, V3) deux autres positions (PL, PR) qui sont distantes l'une de l'autre d'une distance (d), dans lequel sont présentes des distances différentes (dL, dR) entre les deux autres positions (PL, PR) et la position définie (PC) dans la salle virtuelle (V2, V3), et
dans lequel le son ambiophonique (RC, RA, RB) pour la position définie (PC, PA, PB) est formé par le fait que le signal audio (AC, AA, AB) pour le point final réel (EC, EA, EB) associé à la position définie (PC) est calculé de manière décalée dans le temps d'une différence de temps de parcours interaural résultante et avec différents niveaux sonores correspondant à une différence de niveau interaural résultante pour un canal gauche et un canal droit du son ambiophonique (RC) à générer.

8. Procédé selon la revendication 7,
dans lequel un deuxième son ambiophonique global (GB) pour le deuxième point final réel (EB) est généré en ajoutant par canal le premier son ambiophonique (RA) et le troisième son ambiophonique (RC),
dans lequel un troisième son ambiophonique global (GC) pour le troisième point final réel (EC) est généré par addition par canal du premier son ambiophonique (RA) et du deuxième son ambiophonique (RB), et
dans lequel le premier son ambiophonique global (GA) pour le premier point final réel (EA) est généré par addition par canal du deuxième son ambiophonique (RB) et du troisième son ambiophonique (RC).

9. Procédé selon l'une la revendication 1, dans lequel une réception apparente des sons ambiophoniques globaux (GA, GB, GC) pour chaque point final réel (EA, EB, EC) est localisée à la position de récepteur standard (PS).

10. Procédé selon la revendication 1, dans lequel le premier son ambiophonique global (GA) est généré de sorte qu'il se produise au premier point final réel (EA) une impression de son ambiophonique comme si le deuxième signal audio (AB) est envoyé de la deuxième position définie (PB) dans la salle virtuelle (V2, V3) à la position de récepteur standard (PS) et y est reçu et que le troisième signal audio (AC) est envoyé de la troisième position définie (PC) dans la salle virtuelle (V2, V3) à la position de récepteur standard (PS) et y est reçu.

11. Utilisation du procédé selon l'une des revendications précédentes dans un système multimédia pour au moins deux utilisateurs, en particulier un système de téléconférence (100) ou un système multijoueur à base d'Internet.

12. Système de téléconférence (100) avec au moins trois points finaux de téléconférence (A, B, C), dans lequel chacun des points finaux de téléconférence (A, B, C) présente une unité de reproduction audio (101) et une unité d'enregistrement audio (102), dans lequel le système de téléconférence (100) est conçu pour enregistrer un premier et un deuxième signal audio (AA, AB, AC), par exemple d'un premier et d'un deuxième participant (TA, TB, TC), par les unités d'enregistrement audio (102) d'un premier et d'un deuxième point final de téléconférence (A, B, C),
dans lequel le système de téléconférence (100) est conçu pour
générer un son ambiophonique global (GC) selon un procédé selon l'une des revendications précédentes 1 à 10 à partir du premier et du deuxième signal audio (AA, AB, AC),
le transmettre à un troisième point final de téléconférence (A, B, C), par exemple à un troisième participant (TA, TB, TC), et
le sortir par son unité de reproduction audio (101),
dans lequel chaque point final de téléconférence (A, B, C) correspond à un point final réel (EA, EB, EC) au sens du procédé.

13. Système de téléconférence selon la revendication 12, dans lequel le système de téléconférence (100) présente une unité de modération (106) qui est conçue pour activer, désactiver, renforcer et/ou affaiblir au moins un signal audio (AA, AB, AC), un son ambiophonique (RA, RB, RC) et/ou un son ambiophonique global (GA, GB, GC).

14. Système de téléconférence (100) selon l'une des revendications 12 ou 13, dans lequel le système de téléconférence (100) est conçu comme un système de vidéoconférence, de préférence comme un système de conférence web, dans lequel de préférence chaque point final de téléconférence (A, B, C) présente une unité de reproduction d'image (105).

15. Système de téléconférence selon l'une des revendications précédentes 12 à 13,
dans lequel le système de téléconférence (100) est conçu pour représenter l'espace virtuel (V2, V3) au moyen de l'unité de reproduction d'image (105) du troisième point final de téléconférence (C), dans lequel sont représentés chaque fois un premier et un deuxième objet virtuel associés au premier et au deuxième participant (TA, TB) aux positions définies (PA, PB) dans l'espace virtuel (V2, V3) qui sont associées au premier ou au deuxième point final de téléconférence (A, B), et un troisième objet virtuel associé au troisième participant (TC) est représenté à la position de récepteur standard (PS).

16. Système de téléconférence selon la revendication 15,
dans lequel le système de téléconférence (100) est conçu pour représenter la salle virtuelle (V2, V3) au moyen de l'unité de reproduction d'image (105) du deuxième point final de téléconférence (B), dans lequel sont représentés chaque fois un premier et un troisième objet virtuel associés au premier et au troisième participant (TA, TC) aux positions définies (PA, PC) dans le salle virtuelle (V2, V3) qui sont associées au premier ou au troisième point final de téléconférence (A, C), et un deuxième objet virtuel associé au deuxième participant (TB) est représenté à la position de récepteur standard (PS), ou
dans lequel le système de téléconférence (100) est pour représenter la salle virtuelle (V2, V3) au moyen de l'unité de reproduction d'image (105) du premier point final de téléconférence (A), dans lequel sont représentés chaque fois un deuxième et un troisième objet virtuel associés au deuxième et au troisième participant (TB, TC) aux positions définies (PB, PC) dans le salle virtuelle (V2, V3) qui sont associées au deuxième ou au troisième point final de téléconférence (B, C), et un premier objet virtuel associé au premier participant (TA) est représenté à la position de récepteur standard (PS).
